(19) Europäisches Patentamt
European Patent Office
Office européen des brevets

(11) EP 3 968 405 B1

(12) EUROPEAN PATENT SPECIFICATION

(45) Date of publication and mention
of the grant of the patent:
**17.07.2024 Bulletin 2024/29**

(21) Application number: **21196695.7**

(22) Date of filing: **14.09.2021**

(51) International Patent Classification (IPC):
**H01M 4/131** (2010.01)

(52) Cooperative Patent Classification (CPC):
**H01M 4/131; H01M 4/382; H01M 4/505;
H01M 4/525; H01M 2004/028; Y02E 60/10**

(54) **CATHODE ACTIVE MATERIAL FOR LITHIUM SECONDARY BATTERY AND LITHIUM SECONDARY BATTERY INCLUDING THE SAME**

KATHODENAKTIVMATERIAL FÜR EINE LITHIUMSEKUNDÄRBATTERIE UND LITHIUMSEKUNDÄRBATTERIE DAMIT

MATÉRIAU ACTIF DE CATHODE POUR BATTERIE SECONDAIRE AU LITHIUM ET BATTERIE SECONDAIRE AU LITHIUM L'INCLUANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.09.2020 KR 20200118216**

(43) Date of publication of application:
**16.03.2022 Bulletin 2022/11**

(73) Proprietor: **SK On Co., Ltd.
Seoul 03161 (KR)**

(72) Inventors:
• **HWANG, Duck Chul
34124 Daejeon (KR)**
• **YOO, Kyung Bin
34124 Daejeon (KR)**

(74) Representative: **Stolmár & Partner
Patentanwälte PartG mbB
Blumenstraße 17
80331 München (DE)**

(56) References cited:
EP-A2- 1 978 578          WO-A1-2016/204563
WO-A1-2020/036396     KR-A- 20190 093 454
US-A1- 2016 049 649

## EP 3 968 405 B1

**Description**

BACKGROUND

1. Field

The present invention relates to a cathode active material for a lithium secondary battery and a lithium secondary battery including the same. More particularly, the present invention relates to a lithium metal oxide-based cathode active material for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, the secondary battery or a battery pack including the same is being developed and applied as an eco-friendly power source of an electric automobile such as a hybrid vehicle.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer, and an electrolyte immersing the electrode assembly. The lithium secondary battery may further include an outer case having, e.g., a pouch shape.

As an application of the lithium secondary battery has been expanded, the secondary battery having more improved capacity, power and life-span in a limited unit volume is required. For example, construction of the secondary battery to increase capacity of cathode and anode active materials while also improving storage and mechanical stability is needed, as for instance disclosed in WO 2020 036 396.

For example, Korean Published Patent Application 10-2017-0093085 discloses a cathode active material including a transition metal compound and an ion adsorption binder, which may not sufficiently provide high energy density, life-span and high temperature stability.

SUMMARY

According to an aspect of the present invention, which is given in the claims, there is provided a cathode active material for a lithium secondary battery having improved electrical and mechanical reliability and operational stability.

According to an aspect of the present invention, there is provided a lithium secondary battery having improved electrical and mechanical reliability and operational stability.

A cathode active material for a lithium secondary battery includes a lithium metal oxide particle containing nickel (Ni) and cobalt (Co). The lithium metal oxide particle includes a concentration gradient region formed in at least one region between a center of the lithium metal oxide particle and a surface of the lithium metal oxide particle. A ratio of a concentration represented as an atomic percent of Co at the surface relative to an average concentration represented as an atomic percent of Co throughout an entire region of the lithium metal oxide particle is 1.8 or more.

In some embodiments, a ratio of the concentration of Co at the surface relative to a concentration represented as an atomic percent of Co at the center may be 5.3 or more.

In some embodiments, the ratio of the concentration of Co at the surface relative to the average concentration represented as an atomic percent of Co throughout the entire region of the lithium metal oxide particle may be 2.0 or more.

In some embodiments, a ratio of the concentration of Co at the surface relative to a concentration represented as an atomic percent of Co at the center is 6.0 or more.

In some embodiments, in the lithium metal oxide particle, a concentration of Ni may decrease in the concentration gradient region in a direction from the center to the surface, and a concentration of Co may increase in the concentration gradient region in the direction from the center to the surface.

In some embodiments, the lithium metal oxide particle may further contain manganese (Mn), and a concentration of Mn may be constant from the center to the surface.

In some embodiments, Ni and the Co may each have a slope of a concentration gradient in the concentration gradient region.

In some embodiments, the lithium metal oxide particle may have a core region occupying 50% or more of a radius of the lithium metal oxide particles from the center, and concentrations of metal elements may be constant in the core region.

In some embodiments, the concentration gradient region may extend from a surface of the core region.

In some embodiments, the lithium metal oxide particle may have a shell region extending in a direction from the surface to the center, and concentrations of metal elements may be constant in the shell region.

In some embodiments, the concentration gradient region may extend from the surface of the core region to an inner surface of the shell region.

In some embodiments, a distance of the shell region may be 10 nm to 200 nm from the surface.

In some embodiments, a total average composition of the lithium metal oxide particle may be represented by Chemical Formula 1:

[Chemical Formula 1]     $Li_xNi_aCo_bM3_cO_y$

In Chemical Formula 1, M3 includes at least one element selected from the group consisting of Mn, Na, Mg, Ca, Ti, V, Cr, Cu, Zn, Ge, Sr, Ag, Ba, Zr, Nb, Mo, Al, Ga and B, and $0<x\le1.1$, $2\le y\le2.02$, $0\le a\le1$, $0\le b\le1$, $0\le c\le1$, and $0<a+b+c\le1$.

In some embodiments, an average concentration of Ni throughout an entire region of the lithium metal oxide particle may be in a range from 0.6 atom% to 0.99 atom%.

A lithium secondary battery includes a cathode including the cathode active material according to embodiments as described above, and an anode facing the cathode.

According to exemplary embodiments of the present invention, a cathode active material of a lithium secondary battery may include a concentration gradient region in at least one region between a central portion and a surface portion. For example, a high-nickel (high-Ni) composition may be formed in the central portion, and a relatively high-cobalt (high-Co) composition may be formed in the surface portion. Accordingly, a cathode or the cathode active material providing a high capacity and high energy density from the central portion and providing improved chemical and mechanical stability from the surface portion may be achieved

In some embodiments, a concentration gradient of an active metal may be maintained substantially constant in the concentration gradient region, so that a composition and performance change between the central portion and the surface portion may be stably and gradually implemented.

In some embodiments, a mixture of natural graphite and artificial graphite may be used as the anode active material of the lithium secondary battery. Accordingly, a structure from which capacity and life-time stability are improved and balanced may be implemented from each of the cathode and the anode.

BRIEF DESCRIPTION OF THE DRAWINGS

FIGS. 1 and 2 are schematic top planar view and cross-sectional view, respectively, illustrating a lithium secondary battery in accordance with exemplary embodiments.

FIGS. 3 and 4 are graphs showing concentration profiles of cathode active materials included in Examples.

DETAILED DESCRIPTION OF THE EMBODIMENTS

According to embodiments of the present invention, a cathode active material including a lithium metal oxide particle that has a concentration gradient region and has a relatively high cobalt composition on a surface thereof. is provided. Accordingly, there is also provided a lithium secondary battery with improved and balanced energy density, life-span and high temperature stability.

Hereinafter, embodiments of the present invention will be described in detail. However, the embodiments disclosed herein are exemplary and the present invention is not limited to a specific embodiments. The terms "first" and "second" used herein are not intended to limit the number or an order of objects or elements, but only used to relatively distinguish different elements or objects.

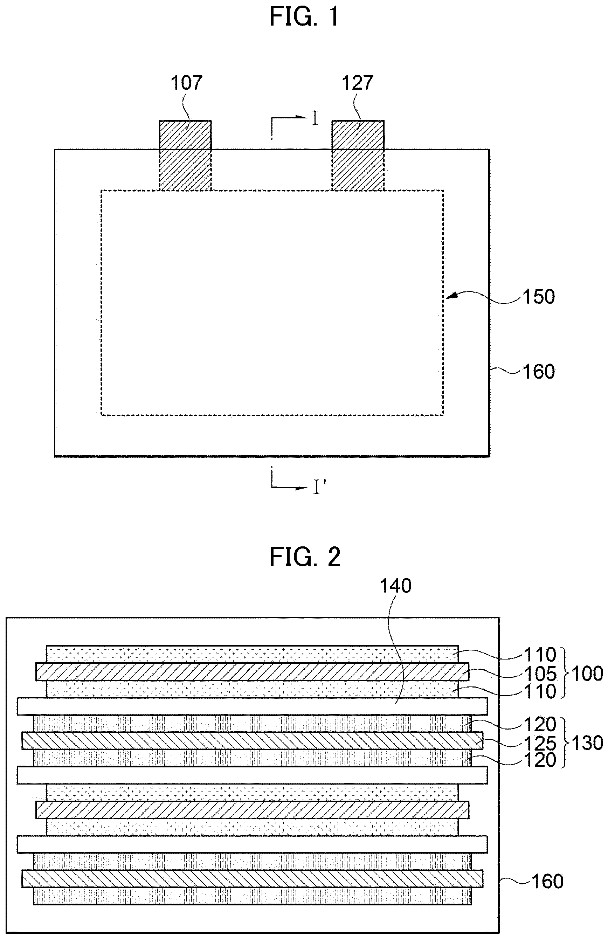

FIGS. 1 and 2 are schematic top planar view and cross-sectional view, respectively, illustrating a lithium secondary battery in accordance with exemplary embodiments.

Referring to FIGS. 1 and 2, a lithium secondary battery may include a cathode 100, an anode 130 and a separator 140 interposed between the cathode and the anode.

The cathode 100 may include a cathode current collector 105 and a cathode active material layer 110 formed by coating a cathode active material to the cathode current collector 105. In exemplary embodiments, the cathode active material may include a lithium metal oxide particle including a concentration gradient region between a center and a surface (e.g., an outermost surface) of the particle.

In the lithium metal oxide particle, concentrations of lithium and oxygen are substantially fixed throughout an entire region of the particle, and at least one metal element among metal elements except for lithium and oxygen may have a continuous concentration gradient in a direction from the center to the surface in the concentration gradient region.

The term "continuous concentration gradient" as used herein may indicate a concentration distribution that continuously changes with a constant trend between the surfaces and the center. The constant trend includes a decreasing trend or an increasing trend of a concentration change.

In some embodiments, a substantially linear concentration gradient may be formed in the concentration gradient region. Accordingly, a substantially constant slope of a concentration gradient may be defined in the concentration gradient region. In an embodiment, the concentration gradient region may have a curved concentration change profile.

In an embodiment, a concentration of at least one metal element among the metal elements other than lithium included in the lithium metal oxide particle may be continuously increased in the concentration gradient region, and a concentration of at least one metal element may be continuously decreased.

In an embodiment, at least one metal among metals other than lithium included in the lithium metal oxide particle may have a substantially constant concentration from the center to the surface.

In an embodiment, the metal elements other than lithium included in the lithium metal oxide particles may include a first metal M1 and a second metal M2. A concentration of the first metal M1 may continuously decrease in the concentration gradient region, and a concentration of the second metal M2 may continuously increase in the concentration gradient region.

In an embodiment, the metal elements other than lithium included in the lithium metal oxide particle may further include a third metal M3. The third metal M3 may have a substantially constant or uniform concentration from the center to the surface.

The term "constant concentration" used herein indicates a substantially uniform concentration from which a constant increase or decrease trend is not formed from the center to the surface. Therefore, it should be understood that the constant concentration may include a case having a concentration increase, a concentration decrease, an outlier of a concentration, etc., locally generated by a deviation of the formation process of the lithium metal oxide particle.

Further, the term "continuous increase" or "continuous decrease" of the concentration used herein is also understood to include substantially increasing trend or decreasing trend as a whole, even though a point that partially deviates from the trend is present due to the process deviation.

The term "concentration" may mean, e.g., a molar ratio or an atomic ratio of the first to third metals.

In exemplary embodiments, an overall average composition of the lithium metal oxide particle may be represented by Chemical Formula 1 below.

$$[\text{Chemical Formula 1}] \quad \text{Li}_x\text{M1}_a\text{M2}_b\text{M3}_c\text{O}_y$$

In the Chemical Formula 1 above, M1, M2 and M3 may each include at least one element selected from the group consisting of Ni, Co, Mn, Na, Mg, Ca, Ti, V, Cr, Cu, Zn, Ge, Sr, Ag, Ba, Zr, Nb, Mo, Al, Ga and B.

In the Chemical Formula 1 above, $0<x\le1.2$, $2\le y\le2.02$, $0<a<1$, $0<b<1$, $0<c<1$, $0<a+b+c\le1$.

In the Chemical Formula 1 above, M1, M2, and M3 may represent the above-described first metal, second metal and third metal, respectively. In some embodiments, M1, M2, and M3 may each include nickel (Ni), cobalt (Co) and manganese (Mn), respectively.

In the Chemical Formula 1, a, b, and c may represent average concentrations of M1, M2, and M3 in an entire particle region, respectively. In some embodiments, the first metal M1 in the Chemical Formula 1 may be nickel, and, for example, $0.6\le a\le0.99$ and $0.01<b+c<0.4$.

When a concentration of nickel is less than about 0.6, overall capacity and power properties of the cathode active material may be degraded. When the concentration of nickel exceeds about 0.99, life-span and mechanical stability of the cathode active material may be degraded.

In an embodiment, $0.7\le a\le0.95$ and $0.05\le b+c\le0.3$, or $0.7\le a\le0.9$ and $0.1\le b+c\le0.3$ in consideration of improving both capacity and stability. For example, $0.77\le a\le0.83$, $0.07\le b\le0.13$ and $0.07\le c\le0.13$, or $0.79<a<0.81$, $0.09\le b\le0.11$ and $0.09\le c\le0.11$.

In a non-limiting example, an average composition of Ni:Co:Mn of the lithium metal oxide particle may be substantially 8:1:1, and the lithium metal oxide particle providing increased capacity and power while maintaining long-term life-span stability and resistance uniformity may be achieved.

For example, nickel may serve as a metal related to capacity of a lithium secondary battery. As a content of nickel increases, capacity and power of the lithium secondary battery may be improved. However, if the content of nickel is excessively increased, life-span, mechanical and electrical stability may be degraded.

For example, if the content of nickel is excessively increased, defects such as ignition and short circuit may not be sufficiently suppressed when penetration by an external object occurs, and sufficient capacity retention during repeated charging and discharging at a high temperature (e.g., 60 °C or higher) may not be provided.

However, according to some embodiments, nickel may be selected as the first metal M1, the content of nickel at the center of the particle may be relatively increased to obtain sufficient capacity and power of the lithium secondary battery. The concentration of nickel may be relatively decreased at the surface to suppress a reduction of capacity and life-span at the high temperature.

For example, cobalt (Co) may serve as a metal related to conductivity or resistance of the lithium secondary battery. In some embodiments, the content of cobalt may be increased at the surface relatively to that at the center to obtain stability of the lithium metal oxide while maintaining improved conductivity and low resistance. Thus, both life-span and capacity of the lithium secondary battery including the cathode active material may be enhanced.

For example, manganese (Mn) may serve as a metal related to mechanical and electrical stability of the lithium secondary battery. In some embodiments, a concentration of manganese may be maintained as substantially being fixed or constant throughout a substantially entire region of the lithium metal oxide particle. Accordingly, stability of the cathode active material may be enhanced at the high temperature, and defects such as an ignition and a short-circuit of the lithium secondary battery may be suppressed while increasing life-span of the lithium secondary battery.

In the invention the lithium metal oxide particle includes a core region including a predetermined distance (a first distance) from the center to the surface.

For example, the first distance may be 1 μm or more from the center of the particle. In an embodiment, the first distance may be 3 μm or more, preferably 5 μm or more from the center of the particle.

In an embodiment, the core region may occupy 50% or more of a radius of the lithium metal oxide particle. In an embodiment, the core region may occupy 60% or more of the radius of the lithium metal oxide particle. In a preferred embodiment, the core region may occupy 70% or more of the radius of the lithium metal oxide particle, and, more preferably, may occupy 80% or more of the radius of the lithium metal oxide particle.

In an embodiment, the first distance of the core region may be appropriately adjusted according to lengths of a shell region and the concentration gradient region, which will be described later, while occupying 50% or more of the radius of the lithium metal oxide particle as described above.

The core region may be provided as a constant concentration region (e.g., a first constant concentration region). For example, the molar ratio or atomic ratio of Ni, Co and Mn in the core region may be maintained substantially constant, and a higher Ni concentration may be maintained in the core region compared to the Ni concentration in other regions.

As described above, the distance of the core region may occupy 50% or more of the radius of the lithium metal oxide particle, and thus sufficient high power and capacity may be implemented from the particle center.

In the invention the lithium metal oxide particle includes a shell region including a predetermined distance (a second distance) from the surface toward the center. The shell region may serve as a region for extending or maintaining a metal concentration ratio of the surface to the predetermined distance.

The second distance of the shell region may be less than the first distance of the core region. In an embodiment, the second distance may be in a range from about 10 nm to 200 nm. For example, the second distance may be in a range from about 20 nm to 200 nm, or from about 30 nm to 100 nm. Preferably, the second distance may be in a range from about 30 nm to 60 nm.

For example, the shell region is provided as a constant concentration region (e.g., a second constant concentration region). For example, the molar ratio or atomic ratio of Ni, Co and Mn in the shell region is maintained substantially constant, and a relatively high Co concentration may be maintained compared to that of the core region.

The core region having the high-Ni composition may be expanded from the center to occupy the largest area in the lithium metal oxide particle, so that a high-capacity and high-output structure may be effectively implemented. Additionally, the core region may be substantially covered by the shell region having a relatively small thickness to enhance life-span and capacity retention properties at the high temperature.

The concentration gradient region may be formed between the core region and a surface of the lithium metal oxide particle. In exemplary embodiments, the concentration gradient region of the lithium metal oxide particle may be formed in a specific region between the particle center and the particle surface.

For example, the concentration gradient region may be disposed between an outer surface of the core region and an outer surface of the lithium metal oxide particle.

The concentration gradient region is formed between the core region and the shell region. For example, the concentration gradient region may extend from the outer surface of the core region to an inner surface of the shell region.

The concentration gradient region may serve as a transfer region or a buffer region for performing a concentration change between the core region and the shell region. The rapid change of concentrations between the core region and the shell region may be buffered by the concentration gradient region, so that the capacity and power of the cathode active material may become entirely uniform or averaged. Further, both high-Ni region and high-Mn region may be present together by the concentration gradient region, so that capacity and life-span stability may be improved.

In some embodiments, a length of the concentration gradient region in a direction from the particle center to the surface may range from about 40 nm to 800 nm. Within the above range, the effect of increasing the power/capacity through the high-Ni composition in the core region may be effectively transferred to the entire particle.

In an embodiment, the length of the concentration gradient region may range from about 40 nm to 500 nm, preferably from about 40 nm to 400 nm, more preferably from about 40 nm to 300 nm.

However, the length of the concentration gradient region may be appropriately adjusted in consideration of the Ni and/or Co content in the core region, the distance or thickness of the core region, the Ni and/or Co content in the shell region, etc., without a specific limitation to the above-mentioned range.

In exemplary embodiments, in the concentration gradient region, the Ni concentration (the molar ratio or atomic ratio) may decrease in a direction from the center to the surface direction, and the Co content may increase in a direction from the center to the surface.

As described above, a slope of a concentration gradient in the concentration gradient region may be defined. In some embodiments, the slopes of the concentration gradients of Ni and Co may be substantially the same.

For example, the concentration of Ni may decrease in the direction from the center to the surface according to the slope of the concentration gradient, and the concentration of Co may increase in the direction from the center to the surface according to the slope of the concentration gradient. The slope of the concentration gradient may represent a ratio of change of the atomic ratios (atomic %) according to an increase of the distance (nm).

In exemplary embodiments, the slope of the concentration gradient may be maintained substantially constant to form a substantially linear concentration gradient. The term "the constant slope of the concentration gradient" may mean that substantially one slope of the concentration gradient may be defined to have a linear tendency as a whole. It should be understood that an entirely linear slope of the concentration gradient is regarded as "the constant slope of the concentration gradient" even though outliers are included in some sections due to the process deviation.

The lithium metal oxide particle may include a relatively high Co content in the surface (or the shell region) compared to that in the center (or in the core region).

In exemplary embodiments, a ratio of the concentration (atomic%) of Co at the surface relative to the concentration (atomic%) of Co at the center may be 5.3 or more. Preferably, the ratio of the concentration (atomic%) of Co at the surface relative to the concentration (atomic%) of Co at the center may be 6.0 or more. More preferably, a ratio of the concentration (atomic%) of Co at the surface relative to the concentration (atomic%) of Co at the center may be 7.5 or more, 15 or more, or 150 or more.

In exemplary embodiments, a ratio of the concentration (atomic%) of Co at the surface relative to an average Co concentration (atomic%) of the entire lithium metal oxide particle may be 1.8 or more. Preferably, the ratio of the concentration (atomic%) of Co at the surface relative to the average Co concentration (atomic%) of the entire lithium metal oxide particle may be 2.0 or more. More preferably, the ratio of the concentration (atomic%) of Co at the surface relative to the average Co concentration (atomic%) of the entire lithium metal oxide particle may be 2.2 or more, 5 or more, or 7.5 or more.

In the above-mentioned concentration ratio range, the life-span may increase in the surface or shell region by the relatively high-Co composition, and the capacity retention property at the high temperature may be more effectively enhanced. Further, ignition stability at the high temperatures may be maintained.

In some embodiments, the cathode active material or the lithium metal oxide particle may further include a coating element or a doping element. For example, the coating element or the doping element may include Al, Ti, Ba, Zr, Si, B, Mg, P or an alloy thereof or an oxide thereof. These may be used alone or in combination thereof. The cathode active material particles may be passivated by the coating or doping element, so that the stability against the penetration of the external object and the life-span may be further improved.

In some embodiments, the lithium metal oxide particle may have a secondary particle structure in which rod-type primary particles may be aggregated. An average particle diameter of the lithium metal oxide particle may be from about 3 $\mu$m to about 17 $\mu$m.

In a formation of the cathode active material or the lithium metal oxide particle, metal precursor solutions having different concentrations may be prepared. The metal precursor solution may include precursors of metals to be included in the cathode electrode active material. For example, the metal precursor may include a metal halide, hydroxide, an acid salt, etc.

For example, the metal precursor may include a nickel precursor, a manganese precursor and a cobalt precursor.

In exemplary embodiments, a first precursor solution having a target composition at the center (e.g., concentrations of nickel, manganese and cobalt at the center) of the lithium metal oxide particle, and a second precursor solution having a target composition at the surface (e.g., concentrations of nickel, manganese and cobalt at the surface) of the lithium metal oxide particle may be prepared.

Thereafter, the first precursor solution may be reacted and stirred to form a precipitate to form a core region, and the second precursor solution may be introduced from a specific time and mixed while continuously changing a mixing ratio so that a concentration gradient may be continuously formed from the core region to the target composition at the surface.

Accordingly, a precipitate may be formed such that concentration of the metals may form the concentration gradient region within the particle. Thereafter, the second precursor solution may be additionally added to fix or stabilize the target composition at the surface in the shell region.

In some embodiments, a chelating agent and a basic agent may be added in the coprecipitation as described above while mixing the precursor solutions. The precipitate may be heat-treated, and then mixed with a lithium salt and fired or heat-treated to obtain the lithium metal oxide particles as the cathode active material.

A cathode slurry may be prepared by mixing and stirring the cathode active material as described above in a solvent with a binder, a conductive agent and/or a dispersive agent. The cathode slurry may be coated on the cathode current collector 105, and then dried and pressed to form the cathode 100.

The cathode current collector 105 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrenebutadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material or the lithium metal oxide particle may be relatively increased. Thus, capacity and power of the lithium secondary battery may be further improved.

The conductive agent may be added to facilitate electron mobility between active material particles. For example, the conductive agent may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

In some embodiments, an electrode density of the cathode 100 may be from 3.0 g/cc to 3.9 g/cc, preferably from 3.2 g/cc to 3.8 g/cc

In exemplary embodiments, the anode 130 may include an anode current collector 125 and an anode active material layer 120 formed by coating an anode active material on the anode current collector 125.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, silicon (Si)-based compound, tin, etc., may be used.

The amorphous carbon may include a hard carbon, cokes, a mesocarbon microbead (MCMB) fired at a temperature of 1,500 °C or less, a mesophase pitch-based carbon fiber (MPCF), etc. The crystalline carbon may include a graphite-based material such as natural graphite, graphitized cokes, graphitized MCMB, graphitized MPCF, etc. The lithium alloy may further include aluminum, zinc, bismuth, cadmium, antimony, silicon, lead, tin, gallium, indium, etc.

The anode current collector 125 may include, e.g., gold, stainless steel, nickel, aluminum, titanium, copper or an alloy thereof, preferably may include copper or a copper alloy.

For example, a slurry may be prepared by mixing and stirring the anode active material with a binder, a conductive agent, a thickening agent in a solvent. The slurry may be coated on at least one surface of the anode current collector 125, and then dried and pressed to form the anode 130.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation. Thus, improvement of power and stability may be efficiently realized through a combination of the above-described cathode active material and the anode active material.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding the separation layer 140.

The electrode assembly 150 may be accommodated together with an electrolyte in an outer case 160 to define a lithium secondary battery. In exemplary embodiments, a non-aqueous electrolyte may be used as the electrolyte.

For example, the non-aqueous electrolyte solution may include a lithium salt and an organic solvent. The lithium salt and may be represented by $Li^+X^-$.

An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N$; $CF_3CF_2(CF_3)_2CO^-$, $(CF_3SO_2)_2CH$; $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 1, electrode tabs (a cathode tab and an anode tab) may protrude from the cathode current collector 110 and the anode electrode current collector 120 included in each electrode cell to one side of the outer case 170. The electrode tabs may be welded together with the one side of the outer case 170 to form an electrode lead (a cathode lead 107 and an anode lead 127) extending or exposed to an outside of the outer case 160.

The lithium secondary battery may be manufactured in, e.g., a cylindrical shape using a can, a square shape, a pouch shape or a coin shape.

According to the above-described exemplary embodiments, a lithium metal oxide having a predetermined composition ratio and concentration profile may be employed as the cathode active material. Accordingly, the lithium secondary battery having high capacity, long-term life-span and improved storage property at high temperature may be implemented.

Hereinafter, preferred embodiments are proposed to more concretely describe the present invention. However, the following examples are only given for illustrating the present invention and those skilled in the related art will obviously understand that various alterations and modifications are possible within the scope of the present invention. Such alterations and modifications are duly included in the appended claims.

Examples and Comparative Examples

(1) Fabrication of cathode active material and cathode

Example 1

A precipitate was formed by continuously changing a precursor mixing ratio so that a concentration gradient of nickel and cobalt was formed in a region between a central portion and a surface portion, and an overall composition was $LiNi_{0.80}Co_{0.06}Mn_{0.14}O_2$, a composition of the central portion was $LiNi_{0.84}Co_{0.02}Mn_{0.14}O_2$ and a composition of the surface portion was $LiNi_{0.74}Co_{0.12}Mn_{0.14}O_2$. Accordingly, a lithium-metal oxide particle (hereinafter, may be abbreviated as A1) (average particle diameter (D50): 13 $\mu$m) having a continuous concentration gradient between the central portion and the surface portion was prepared as a cathode active material.

The cathode active material, Denka Black as a conductive material and PVDF as a binder were mixed in a mass ratio of 92:5:3 to prepare a cathode mixture, and then the cathode mixture was coated, dried and pressed on an aluminum substrate to prepare a cathode.

Example 2

A cathode active material and a cathode were prepared by the same method as that in Example 1, except that the lithium-metal oxide particle (hereinafter, which may be abbreviated as A2) having a surface composition of $LiNi_{0.71}Co_{0.15}Mn_{0.14}O_2$ was formed.

Example 3

A cathode active material and a cathode were prepared by the same method as that in Example 1, except that the lithium-metal oxide particle (hereinafter, which may be abbreviated as A3) having a surface composition of $LiNi_{0.56}Co_{0.30}Mn_{0.14}O_2$ was formed.

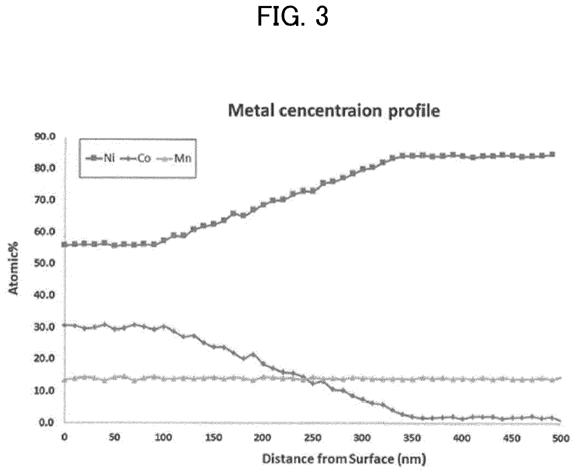

FIG. 3 is a graph showing a concentration profile of metal elements in the lithium metal oxide particle A2 of Example 3. For example, the concentrations of the metal elements were measured with an interval of 10 nm in a direction from the surface of the lithium metal oxide particle to the center. When the concentration became constant after entering a central portion through the concentration gradient region, the measurement was stopped. Referring to FIG. 3, a concentration gradient region of Ni and Co was formed in a region from about 90 nm to 350 nm.

Example 4

A cathode active material and a cathode were prepared by the same method as that in Example 1, except that the lithium-metal oxide particle (hereinafter, which may be abbreviated as A4) having a surface composition of $LiNi_{0.41}Co_{0.45}Mn_{0.14}O_2$ was formed.

Example 5

A cathode active material and a cathode were prepared by the same method as that in Example 1, except that the lithium-metal oxide particle (hereinafter, which may be abbreviated as A5) having a surface composition of $LiNi_{0.31}Co_{0.55}Mn_{0.14}O_2$ was formed.

Example 6

A cathode active material and a cathode were prepared by the same method as that in Example 1, except that the lithium-metal oxide particle (hereinafter, may be abbreviated as A6) having a surface composition of $LiNi_{0.21}Co_{0.65}Mn_{0.14}O_2$ was formed.

Example 7

A cathode active material and a cathode were prepared by the same method as that in Example 1, except that the lithium-metal oxide particle (hereinafter, which may be referred to as A9) was formed so that an overall composition was $LiNi_{0.88}Co_{0.09}Mn_{0.03}O_2$, a central composition was $LiNi_{0.94}Co_{0.03}Mn_{0.03}O_2$ and a surface composition was $LiNi_{0.81}Co_{0.16}Mn_{0.03}O_2$.

Example 8

A cathode active material and a cathode were prepared by the same method as that in Example 1, except that the lithium-metal oxide particle (hereinafter, which may be referred to as A10) was formed so that an overall composition was $LiNi_{0.88}Co_{0.09}Mn_{0.03}O_2$, a central composition was $LiNi_{0.94}Co_{0.03}Mn_{0.03}O_2$ and a surface composition was $LiNi_{0.77}Co_{0.20}Mn_{0.03}O_2$.

Example 9

A cathode active material and a cathode were prepared by the same method as that in Example 7, except that the lithium-metal oxide particle (hereinafter, which may be abbreviated as A11) having a surface composition of $LiNi_{0.67}Co_{0.30}Mn_{0.03}O_2$ was formed.

Example 10

A cathode active material and a cathode were prepared by the same method as that in Example 7, except that the lithium-metal oxide particle (hereinafter, which may be abbreviated as A12) having a surface composition of $LiNi_{0.52}Co_{0.45}Mn_{0.03}O_2$ was formed.

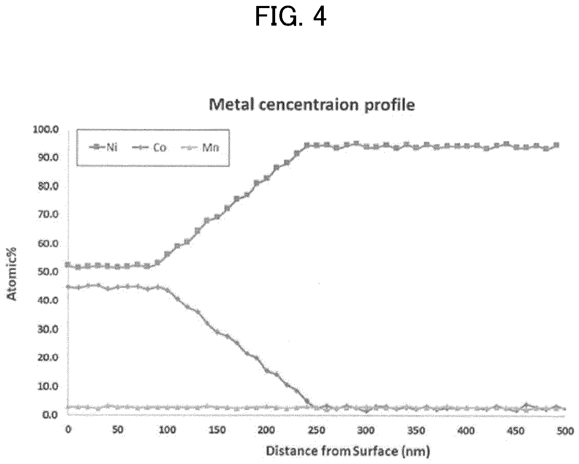

FIG. 4 is a graph showing a concentration profile of metal elements in the lithium metal oxide particle A12 of Example 10. For example, the concentrations of the metal elements were measured with an interval of 10 nm in a direction from the surface of the lithium metal oxide particle to the center. When the concentration became constant after entering a central portion through the concentration gradient region, the measurement was stopped. Referring to FIG. 4, a concentration gradient region of Ni and Co was formed in a region from about 90 nm to 250 nm.

Example 11

A cathode active material and a cathode were prepared by the same method as that in Example 7, except that the lithium-metal oxide particle (hereinafter, which may be abbreviated as A13) having a surface composition of $LiNi_{0.42}Co_{0.55}Mn_{0.03}O_2$ was formed.

Example 12

A cathode active material and a cathode were prepared by the same method as that in Example 7, except that the lithium-metal oxide particle (hereinafter, which may be abbreviated as A14) having a surface composition of $LiNi_{0.32}Co_{0.65}Mn_{0.03}O_2$ was formed.

Example 13

A cathode active material and a cathode were prepared by the same method as that in Example 1, except that the lithium-metal oxide particle (hereinafter, which may be referred to as A18) was formed so that an overall composition was $LiNi_{0.96}Co_{0.02}Mn_{0.02}O_2$, a central composition was $LiNi_{0.979}Co_{0.001}Mn_{0.02}O_2$ and a surface composition was $LiNi_{0.83}Co_{0.15}Mn_{0.02}O_2$.

Example 14

A cathode active material and a cathode were prepared by the same method as that in Example 13, except that the lithium-metal oxide particle (hereinafter, which may be abbreviated as A19) having a surface composition of $LiNi_{0.78}Co_{0.20}Mn_{0.02}O_2$ was formed.

Example 15

A cathode active material and a cathode were prepared by the same method as that in Example 13, except that the lithium-metal oxide particle (hereinafter, which may be abbreviated as A20) having a surface composition of $LiNi_{0.68}Co_{0.30}Mn_{0.02}O_2$ was formed.

Example 16

A cathode active material and a cathode were prepared by the same method as that in Example 13, except that the lithium-metal oxide particle (hereinafter, which may be abbreviated as A21) having a surface composition of $LiNi_{0.53}Co_{0.45}Mn_{0.02}O_2$ was formed.

Example 17

A cathode active material and a cathode were prepared by the same method as that in Example 13, except that the lithium-metal oxide particle (hereinafter, which may be abbreviated as A22) having a surface composition of $LiNi_{0.43}Co_{0.55}Mn_{0.02}O_2$ was formed.

Example 18

A cathode active material and a cathode were prepared by the same method as that in Example 13, except that the lithium-metal oxide particle (hereinafter, which may be abbreviated as A23) having a surface composition of $LiNi_{0.33}Co_{0.65}Mn_{0.02}O_2$ was formed.

Comparative Example 1

A cathode was manufactured by the same method as that in Example 1, except that lithium-metal oxide (hereinafter, which may be abbreviated as A7) having a composition of $LiNi_{0.80}Co_{0.06}Mn_{0.14}O_2$ without a concentration gradient therein was used.

Comparative Example 2

A cathode was manufactured by the same method as that in Example 1, except that the lithium-metal oxide (hereinafter, which may be abbreviated as A8) having a concentration gradient of nickel and manganese in a region between a central portion and a surface portion was formed so that an overall composition was $LiNi_{0.80}Co_{0.06}Mn_{0.14}O_2$, a central composition was $LiNi_{0.82}Co_{0.06}Mn_{0.12}O_2$, and a surface composition was $LiNi_{0.64}Co_{0.06}Mn_{0.30}O_2$.

Comparative Example 3

A cathode was prepared by the same method as that in Example 7, except that the lithium-metal oxide (hereinafter, which may be abbreviated as A15) having a composition of $LiNi_{0.88}Co_{0.09}Mn_{0.03}O_2$ without a concentration gradient therein was used.

Comparative Example 4

A cathode was manufactured by the same method as that in Example 7, except that the lithium-metal oxide (hereinafter, which may be abbreviated as A16) having a concentration gradient of nickel and manganese in a region between a central portion and a surface portion was formed so that an overall composition was $LiNi_{0.89}Co_{0.09}Mn_{0.03}O_2$,

a central composition was $LiNi_{0.90}Co_{0.09}Mn_{0.01}O_2$, and a surface composition was $LiNi_{0.61}Co_{0.09}Mn_{0.30}O_2$.

Comparative Example 5

A cathode was prepared by the same method as that in Example 7, except that lithium-metal oxide particle (hereinafter, may be abbreviated as A17) having a surface composition of $LiNi_{0.82}Co_{0.15}Mn_{0.03}O_2$ were formed.

Comparative Example 6

A cathode was prepared by the same method as that in Example 13, except that the lithium-metal oxide (hereinafter, which may be abbreviated as A24) having a composition of $LiNi_{0.96}Co_{0.02}Mn_{0.02}O_2$ without a concentration gradient therein was used.

Comparative Example 7

A cathode was manufactured by the same method as that in Example 13, except that the lithium-metal oxide (hereinafter, which may be abbreviated as A25) having a concentration gradient of nickel and manganese in a region between a central portion and a surface portion was formed so that an overall composition was $LiNi_{0.96}Co_{0.02}Mn_{0.02}O_2$, a central composition was $LiNi_{0.979}Co_{0.02}Mn_{0.001}O_2$, and a surface composition was $LiNi_{0.78}Co_{0.02}Mn_{0.20}O_2$.

The compositions of the cathode active materials of Examples and Comparative Examples are shown in Table 1 below. In Table 1, the term "bulk composition" indicates an average composition throughout an entire area of the particle or the cathode active material.

[Table 1]

| | Type | Bulk Composition (Atomic %) | | | Central Composition (Atomic %) | | | Surface Composition (Atomic %) | | |
|---|---|---|---|---|---|---|---|---|---|---|
| | | Ni | Co | Mn | Ni | Co | Mn | Ni | Co | Mn |
| Comparative Example 1 | A7 | 80 | 6 | 14 | 80 | 6 | 14 | 80 | 6 | 14 |
| Comparative Example 2 | A8 | 80 | 6 | 14 | 82 | 6 | 12 | 64 | 6 | 30 |
| Example 1 | A1 | 80 | 6 | 14 | 84 | 2 | 14 | 74 | 12 | 14 |
| Example 2 | A2 | 80 | 6 | 14 | 84 | 2 | 14 | 71 | 15 | 14 |
| Example 3 | A3 | 80 | 6 | 14 | 84 | 2 | 14 | 56 | 30 | 14 |
| Example 4 | A4 | 80 | 6 | 14 | 84 | 2 | 14 | 41 | 45 | 14 |
| Example 5 | AS | 80 | 6 | 14 | 84 | 2 | 14 | 31 | 55 | 14 |
| Example 6 | A6 | 80 | 6 | 14 | 84 | 2 | 14 | 21 | 65 | 14 |
| Comparative Example 3 | A15 | 88 | 9 | 3 | 88 | 9 | 3 | 88 | 9 | 3 |
| Comparative Example 4 | A16 | 88 | 9 | 3 | 90 | 9 | 1 | 61 | 9 | 30 |
| Comparative Example 5 | A17 | 88 | 9 | 3 | 94 | 3 | 3 | 82 | 15 | 3 |
| Example 7 | A9 | 88 | 9 | 3 | 94 | 3 | 3 | 81 | 16 | 2 |
| Example 8 | A10 | 88 | 9 | 3 | 94 | 3 | 3 | 77 | 20 | 3 |
| Example 9 | A11 | 88 | 9 | 3 | 94 | 3 | 3 | 67 | 30 | 3 |
| Example 10 | A12 | 88 | 9 | 3 | 94 | 3 | 3 | 52 | 45 | 3 |
| Example 11 | A13 | 88 | 9 | 3 | 94 | 3 | 3 | 42 | 55 | 3 |
| Example 12 | A14 | 88 | 9 | 3 | 94 | 3 | 3 | 32 | 65 | 3 |

(continued)

| | Type | Bulk Composition (Atomic %) | | | Central Composition (Atomic %) | | | Surface Composition (Atomic %) | | |
|---|---|---|---|---|---|---|---|---|---|---|
| | | Ni | Co | Mn | Ni | Co | Mn | Ni | Co | Mn |
| Comparative Example 6 | A24 | 96 | 2 | 2 | 96 | 2 | 2 | 96 | 2 | 2 |
| Comparative Example 7 | A25 | 96 | 2 | 2 | 97.9 | 2 | 0.1 | 78 | 2 | 20 |
| Example 13 | A18 | 96 | 2 | 2 | 97.9 | 0.10 | 2 | 83 | 15 | 2 |
| Example 14 | A19 | 96 | 2 | 2 | 97.9 | 0.1 | 2 | 78 | 20 | 2 |
| Example 15 | A20 | 96 | 2 | 2 | 97.9 | 0.1 | 2 | 68 | 30 | 2 |
| Example 16 | A21 | 96 | 2 | 2 | 97.9 | 0.1 | 2 | 53 | 45 | 2 |
| Example 17 | A22 | 96 | 2 | 2 | 97.9 | 0.1 | 2 | 43 | 55 | 2 |
| Example 18 | A23 | 96 | 2 | 2 | 97.9 | 0.1 | 2 | 33 | 65 | 2 |

(2) Preparation of secondary battery (Coin cell)

Secondary batteries were manufactured using the cathodes of Examples and Comparative Examples. A lithium metal foil was used as an anode active material, and a separator (polyethylene, thickness 12μm) was interposed between the cathode and the lithium foil, and the electrolyte was injected and clamped to produce a coin cell. The electrolyte included a 1M LiPF6 solution using a mixed solvent of EC/EMC/DEC (25/45/30; volume ratio). The coin cell product was impregnated for more than 12 hours.

Experimental Example

Evaluation of life-span and capacity properties

For each of the lithium secondary batteries prepared in Examples and Comparative Examples, charging and discharging were repeated 300 times under the conditions shown in Table 2 below to evaluate life-span and capacity properties.

[Table 2]

| Operation | Voltage (V) | charging/discharging MODE | Current | Cut-off condition | The number of cycle |
|---|---|---|---|---|---|
| Charging | 4.3 | CC-CV | 0.1C | 0.05C | 1 |
| Discharging | 3.0 | CC | 0.1C | 3.0V | |
| Charging | 4.3 | CC-CV | 0.5C | 0.05C | 300 |
| Discharging | 3.0 | CC | 1.0C | 3.0V | |

The results are shown in Table 3 below together with content ratios of a surface Co.

[Table 3]

| | Surface Co / Central Co | Surface Co / Bulk Co | 0.1C Discharging Capacity (mAh/g) | 0.1C Efficiency (%) | Life-span (%) at 300th cycle |
|---|---|---|---|---|---|
| Comparative Example 1 | 1.0 | 1.0 | 194 | 88.2 | 45 |
| Comparative Example 2 | 1.0 | 1.0 | 194.5 | 88.4 | 58 |
| Example 1 | 6.0 | 2.0 | 195.1 | 88.6 | 60 |

(continued)

| | Surface Co / Central Co | Surface Co / Bulk Co | 0.1C Discharging Capacity (mAh/g) | 0.1C Efficiency (%) | Life-span (%) at 300th cycle |
|---|---|---|---|---|---|
| Example 2 | 7.5 | 2.5 | 199 | 90.2 | 61 |
| Example 3 | 15.0 | 5.0 | 200 | 90.7 | 60.5 |
| Example 4 | 22.5 | 7.5 | 201 | 91.0 | 61.2 |
| Example 5 | 27.5 | 9.2 | 202 | 91.4 | 62.3 |
| Example 6 | 32.5 | 10.8 | 202.1 | 91.4 | 62 |
| Comparative Example 3 | 1.0 | 1.0 | 205 | 87.3 | 40 |
| Comparative Example 4 | 1.0 | 1.0 | 205.3 | 87.4 | 52.6 |
| Comparative Example 5 | 5.0 | 1.7 | 205.7 | 87.5 | 55.2 |
| Example 7 | 5.3 | 1.8 | 210.1 | 89.6 | 55.9 |
| Example 8 | 6.7 | 2.2 | 212.2 | 90.1 | 56.1 |
| Example 9 | 10.0 | 3.3 | 213.5 | 90.5 | 55.4 |
| Example 10 | 15.0 | 5.0 | 215 | 91.1 | 56.9 |
| Example 11 | 18.3 | 6.1 | 215.5 | 91.2 | 57 |
| Example 12 | 21.7 | 7.2 | 215.5 | 91.2 | 56.8 |
| Comparative Example 6 | 1.0 | 1.0 | 215 | 86.1 | 35 |
| Comparative Example 7 | 1.0 | 1.0 | 215.2 | 84.4 | 48 |
| Example 13 | 150.0 | 7.5 | 223 | 87.4 | 50.1 |
| Example 14 | 200.0 | 10.0 | 225.1 | 88.2 | 51.3 |
| Example 15 | 300.0 | 15.0 | 230.5 | 90.2 | 50.6 |
| Example 16 | 450.0 | 22.5 | 232.1 | 90.6 | 52 |
| Example 17 | 550.0 | 27.5 | 233.4 | 91.1 | 52.4 |
| Example 18 | 650.0 | 32.5 | 233.3 | 91.1 | 52.3 |

Referring to Table 3, the lithium secondary batteries of Examples provided improved life-span and capacity properties compared to those of Comparative Examples.

Specifically, in a comparison of Examples 1 to 6 and Comparative Examples 1 to 2, when the total particle composition was Ni: Co: Mn = 80: 6: 14, a cobalt concentration in the surface portion was 6.0 times or more than that in the central portion, and was 2.0 times or more than the bulk Co concentration in Examples to provide the improved life-span and capacity properties.

In a comparison of Examples 7 to 12 and Comparative Examples 3 to 5, when the total particle composition was Ni: Co: Mn = 88: 9: 3, a cobalt concentration in the surface portion was 5.3 times or more than that in the central portion, and was 1.8 times or more than the bulk Co concentration in Examples to provide the improved life-span and capacity properties.

In a comparison of Examples 13 to 18 and Comparative Examples 6 to 7, when the total particle composition was Ni: Co: Mn = 96 : 2 : 2, a cobalt concentration in the surface portion was 150 times or more than that in the central portion, and was 7.5 times or more than the bulk Co concentration in Examples to provide the improved life-span and capacity properties.

Further, the lithium secondary batteries of Examples provided the improved life-span and capacity properties compared to those from Comparative Examples 1, 3 and 6 having entirely fixed concentrations.

**Claims**

1.  A cathode active material for a lithium secondary battery comprising a lithium metal oxide particle containing nickel (Ni) and cobalt (Co),
    wherein the lithium metal oxide particle includes:

    a concentration gradient region formed in at least one region between a center of the lithium metal oxide particle and a surface of the lithium metal oxide particle,
    a core region including a predetermined distance from the center to the surface, wherein the core region is provided as a first constant concentration region, and
    a shell region including a predetermined distance from the surface toward the center, wherein the shell region is provided as a second constant concentration region and wherein the concentration gradient region is formed between the core region and the shell region,
    wherein a ratio of a concentration represented as an atomic percent of Co at the surface relative to an average concentration represented as an atomic percent of Co throughout an entire region of the lithium metal oxide particle is 1.8 or more.

2.  The cathode active material for a lithium secondary battery according to claim 1, wherein a ratio of the concentration of Co at the surface relative to a concentration represented as an atomic percent of Co at the center is 5.3 or more.

3.  The cathode active material for a lithium secondary battery according to claim 1, wherein the ratio of the concentration of Co at the surface relative to the average concentration represented as an atomic percent of Co throughout the entire region of the lithium metal oxide particle is 2.0 or more.

4.  The cathode active material for a lithium secondary battery according to claim 1, wherein a ratio of the concentration of Co at the surface relative to a concentration represented as an atomic percent of Co at the center is 6.0 or more.

5.  The cathode active material for a lithium secondary battery according to claim 1, wherein, in the lithium metal oxide particle, a concentration of Ni decreases in the concentration gradient region in a direction from the center to the surface, and a concentration of Co increases in the concentration gradient region in the direction from the center to the surface.

6.  The cathode active material for a lithium secondary battery according to claim 5, wherein the lithium metal oxide particle further contains manganese (Mn), and a concentration of Mn is constant from the center to the surface.

7.  The positive active material for a lithium secondary battery according to claim 5, wherein Ni and the Co each has a slope of a concentration gradient in the concentration gradient region.

8.  The cathode active material for a lithium secondary battery according to claim 1, wherein the core region occupies 50% or more of a radius of the lithium metal oxide particle from the center, and concentrations of metal elements are constant in the core region.

9.  The cathode active material for a lithium secondary battery according to claim 8, wherein the shell region extends in a direction from the surface to the center, and concentrations of metal elements are constant in the shell region.

10. The cathode active material for a lithium secondary battery according to claim 1, wherein a distance of the shell region is 10 nm to 200 nm from the surface.

11. The cathode active material for a lithium secondary battery according to claim 1, wherein a total average composition of the lithium metal oxide particle is represented by Chemical Formula 1:

    [Chemical Formula 1]          $Li_xNi_aCo_bM3_cO_y$

    wherein, in Chemical Formula 1, M3 includes at least one element selected from the group consisting of Mn, Na, Mg, Ca, Ti, V, Cr, Cu, Zn, Ge, Sr, Ag, Ba, Zr, Nb, Mo, Al, Ga and B, and

    $$0 < x \leq 1.2,\ 2 \leq y \leq 2.02,\ 0 \leq a \leq 1,\ 0 \leq b \leq 1,\ 0 \leq c \leq 1,\ \text{and}\ 0 < a+b+c \leq 1.$$

**12.** The cathode active material for a lithium secondary battery according to claim 1, wherein an average concentration of Ni throughout an entire region of the lithium metal oxide particle is in a range from 0.6 atom% to 0.99 atom%.

**13.** A lithium secondary battery, comprising:

a cathode including the cathode active material of claim 1; and
an anode facing the cathode.

**Patentansprüche**

**1.** Kathodenaktivmaterial für eine Lithium-Sekundärbatterie, das ein Lithium-Metalloxid-Partikel umfasst, das Nickel (Ni) und Kobalt (Co) enthält,
wobei das Lithium-Metalloxid-Partikel enthält:

einen Konzentrationsgradientenbereich, der in mindestens einem Bereich zwischen einem Zentrum des Lithium-Metalloxid-Partikels und einer Oberfläche des Lithium-Metalloxid-Partikels ausgebildet ist,
einen Kernbereich, der eine vorbestimmte Distanz von dem Zentrum zu der Oberfläche einschließt, wobei der Kernbereich als ein erster Bereich mit konstanter Konzentration vorgesehen ist, und
einen Schalenbereich, der eine vorbestimmte Distanz von der Oberfläche in Richtung des Zentrums einschließt, wobei der Schalenbereich als ein zweiter Bereich mit konstanter Konzentration vorgesehen ist und wobei der Konzentrationsgradientenbereich zwischen dem Kernbereich und dem Schalenbereich ausgebildet ist,
wobei das Verhältnis einer Konzentration, die als Atomprozent von Co an der Oberfläche dargestellt wird, relativ zu einer durchschnittlichen Konzentration, die als Atomprozent von Co in einem gesamten Bereich des Lithium-Metalloxid-Partikels dargestellt wird, 1,8 oder mehr beträgt.

**2.** Kathodenaktivmaterial für eine Lithium-Sekundärbatterie nach Anspruch 1, wobei ein Verhältnis der Co-Konzentration an der Oberfläche relativ zu einer Konzentration, die als Atomprozent von Co im Zentrum dargestellt wird, 5,3 oder mehr beträgt.

**3.** Kathodenaktivmaterial für eine Lithium-Sekundärbatterie nach Anspruch 1, wobei das Verhältnis der Co-Konzentration an der Oberfläche relativ zu der durchschnittlichen Konzentration, die als Atomprozent von Co im gesamten Bereich des Lithium-Metalloxid-Partikels dargestellt wird, 2,0 oder mehr beträgt.

**4.** Kathodenaktivmaterial für eine Lithium-Sekundärbatterie nach Anspruch 1, wobei ein Verhältnis der Co-Konzentration an der Oberfläche relativ zu einer Konzentration, die als Atomprozent von Co im Zentrum dargestellt wird, 6,0 oder mehr beträgt.

**5.** Kathodenaktivmaterial für eine Lithium-Sekundärbatterie nach Anspruch 1, wobei in dem Lithium-Metalloxid-Partikel eine Ni-Konzentration in dem Konzentrationsgradientenbereich in einer Richtung von dem Zentrum zu der Oberfläche abnimmt und eine Co-Konzentration in dem Konzentrationsgradientenbereich in der Richtung von dem Zentrum zu der Oberfläche zunimmt.

**6.** Kathodenaktivmaterial für eine Lithium-Sekundärbatterie nach Anspruch 5, wobei das Lithium-Metalloxid-Partikel außerdem Mangan (Mn) enthält und eine Mn-Konzentration von dem Zentrum zu der Oberfläche hin konstant ist.

**7.** Positives Aktivmaterial für eine Lithium-Sekundärbatterie nach Anspruch 5, wobei Ni und Co jeweils eine Steigung eines Konzentrationsgradienten in der Konzentrationsgradientenregion aufwei sen.

**8.** Kathodenaktivmaterial für eine Lithium-Sekundärbatterie nach Anspruch 1, wobei der Kernbereich 50 % oder mehr eines Radius des Lithium-Metalloxid-Partikels von dem Zentrum aus einnimmt und die Konzentrationen der Metallelemente in dem Kernbereich konstant sind.

**9.** Kathodenaktivmaterial für eine Lithium-Sekundärbatterie nach Anspruch 8, wobei sich der Schalenbereich in einer Richtung von der Oberfläche zu dem Zentrum erstreckt und die Konzentrationen der Metallelemente in dem Schalenbereich konstant sind.

**10.** Kathodenaktivmaterial für eine Lithium-Sekundärbatterie nach Anspruch 1, wobei eine Distanz des Schalenbereichs 10 nm bis 200 nm von der Oberfläche beträgt.

11. Kathodenaktivmaterial für eine Lithium-Sekundärbatterie nach Anspruch 1, wobei die durchschnittliche Gesamtzusammensetzung des Lithium-Metalloxid-Partikels durch die chemische Formel 1 dargestellt wird:

[Chemische Formel 1 $\quad\quad Li_xNi_aCo_bM3_cO_y$

wobei in der chemischen Formel 1 M3 mindestens ein Element enthält, das aus der Gruppe ausgewählt ist, die aus Mn, Na, Mg, Ca, Ti, V, Cr, Cu, Zn, Ge, Sr, Ag, Ba, Zr, Nb, Mo, Al, Ga und B besteht, und

$$0{<}x{\leq}1{,}2,\ 2{\leq}y{\leq}2{,}02,\ 0{\leq}a{\leq}1,\ 0{\leq}b{\leq}1,\ 0{\leq}c{\leq}1,\ und\ 0{<}a{+}b{+}c{\leq}1$$

gilt.

12. Kathodenaktivmaterial für eine Lithium-Sekundärbatterie nach Anspruch 1, wobei eine durchschnittliche Ni-Konzentration über einen gesamten Bereich des Lithium-Metalloxid-Partikels in einem Bereich von 0,6 Atom-% bis 0,99 Atom-% liegt.

13. Lithium-Sekundärbatterie, umfassend:

eine Kathode, die das Kathodenaktivmaterial nach Anspruch 1 enthält; und
eine Anode, die der Kathode gegenüberliegt.

**Revendications**

1. Matériau actif de cathode pour une batterie secondaire au lithium comprenant une particule d'oxyde métallique de lithium contenant du nickel (Ni) et du cobalt (Co),
dans lequel la particule d'oxyde métallique de lithium comprend :

une région de gradient de concentration formée dans au moins une région entre un centre de la particule d'oxyde métallique de lithium et une surface de la particule d'oxyde métallique de lithium,
une région centrale comprenant une distance prédéterminée entre le centre et la surface, dans laquelle la région centrale est une première région à concentration constante, et
une région d'enveloppe comprenant une distance prédéterminée de la surface vers le centre, dans laquelle la région d'enveloppe est fournie comme une seconde région de concentration constante et dans laquelle la région de gradient de concentration est formée entre la région centrale et la région d'enveloppe,
dans lequel le rapport entre une concentration représentée par un pourcentage atomique de Co à la surface et une concentration moyenne représentée par un pourcentage atomique de Co dans toute une région de la particule d'oxyde métallique de lithium est égal ou supérieur à 1,8.

2. Matériau actif de cathode pour une batterie secondaire au lithium selon la revendication 1, dans lequel le rapport entre la concentration de Co à la surface et la concentration représentée par un pourcentage atomique de Co au centre est supérieur ou égal à 5,3.

3. Matériau actif de cathode pour une batterie secondaire au lithium selon la revendication 1, dans lequel le rapport entre la concentration de Co à la surface et la concentration moyenne représentée par un pourcentage atomique de Co dans toute la région de la particule d'oxyde métallique de lithium est supérieur ou égal à 2,0.

4. Matériau actif de cathode pour une batterie secondaire au lithium selon la revendication 1, dans lequel le rapport entre la concentration de Co à la surface et la concentration représentée par un pourcentage atomique de Co au centre est supérieur ou égal à 6,0.

5. Matériau actif de cathode pour une batterie secondaire au lithium selon la revendication 1, dans lequel, dans la particule d'oxyde métallique de lithium, une concentration de Ni diminue dans la région de gradient de concentration dans une direction allant du centre vers la surface, et une concentration de Co augmente dans la région de gradient de concentration dans la direction allant du centre vers la surface.

**6.** Matériau actif de cathode pour une batterie secondaire au lithium selon la revendication 5, dans lequel la particule d'oxyde métallique de lithium contient en outre du manganèse (Mn), et une concentration de Mn est constante du centre à la surface.

**7.** Matériau actif positif pour une batterie secondaire au lithium selon la revendication 5, dans lequel le Ni et le Co ont chacun une pente de gradient de concentration dans la région de gradient de concentration.

**8.** Matériau actif de cathode pour une batterie secondaire au lithium selon la revendication 1, dans lequel la région centrale occupe 50 % ou plus d'un rayon de la particule d'oxyde métallique de lithium à partir du centre, et les concentrations d'éléments métalliques sont constantes dans la région centrale.

**9.** Matériau actif de cathode pour une batterie secondaire au lithium selon la revendication 8, dans lequel la région d'enveloppe s'étend dans une direction allant de la surface au centre, et les concentrations d'éléments métalliques sont constantes dans la région d'enveloppe.

**10.** Matériau actif de cathode pour une batterie secondaire au lithium selon la revendication 1, dans lequel une distance de la région d'enveloppe est comprise entre 10 nm et 200 nm de la surface.

**11.** Matériau actif de cathode pour une batterie secondaire au lithium selon la revendication 1, dans lequel une composition moyenne totale de la particule d'oxyde métallique de lithium est représentée par la formule chimique 1 :
[Formule chimique 1]
dans laquelle, dans la formule chimique 1, M3 comprend au moins un élément choisi dans le groupe constitué de Mn, Na, Mg, Ca, Ti, V, Cr, Cu, Zn, Ge, Sr, Ag, Ba, Zr, Nb, Mo, Al, Ga et B, et

$$0 < x \le 1,2, \quad 2 \le y \le 2,02, \quad 0 \le a \le 1, \quad 0 \le b \le 1, \quad 0 \le c \le 1, \text{ et } 0 < a+b+c \le 1.$$

**12.** Matériau actif de cathode pour une batterie secondaire au lithium selon la revendication 1, dans lequel une concentration moyenne de Ni dans une région entière de la particule d'oxyde métallique de lithium est comprise entre 0,6 et 0,99 % atomique.

**13.** Batterie secondaire au lithium, comprenant :

une cathode comprenant le matériau actif de cathode selon la revendication 1 ; et
une anode face à la cathode.

# FIG. 1

# FIG. 2

FIG. 3

Metal cencentraion profile

# FIG. 4

**EP 3 968 405 B1**

**REFERENCES CITED IN THE DESCRIPTION**

**Patent documents cited in the description**

- WO 2020036396 A
- KR 1020170093085